# EUROPÄISCHE PATENTSCHRIFT

(11) **EP 3 540 327 B1**
(45) Veröffentlichungstag und Bekanntmachung des Hinweises auf die Patenterteilung: **20.10.2021**
(21) Anmeldenummer: 19155301.5
(22) Anmeldetag: 04.02.2019
(51) Int. Cl.: F24H 4/04, F24D 3/18, F24D 11/02, F24D 17/02, F24D 19/10

(54) **WÄRMEPUMPENANLAGE**
HEAT PUMP ASSEMBLY
INSTALLATION DE POMPE À CHALEUR

(30) Priorität: 07.02.2018 DE 102018102670
(43) Veröffentlichungstag der Anmeldung: 18.09.2019
(73) Patentinhaber: Viessmann Climate Solutions SE, 35108 Allendorf (DE)
(72) Erfinder: Bätzel, Jörg, 57319 Bad Berleburg (DE)
(74) Vertreter: Wolf, Michael

(56) Entgegenhaltungen:
- EP-A1- 2 913 594
- EP-A1- 2 933 580
- JP-A- 2013 148 266
- US-A1- 2012 304 677

## Beschreibung

Die Erfindung betrifft eine Wärmepumpenanlage gemäß dem Oberbegriff des Patentanspruchs 1.

Eine Wärmepumpenanlage der eingangs genannten Art ist aus dem Dokument US 2012/0304677 A1 bekannt.

Eine Wärmepumpenanlage der eingangs genannten Art ist darüber hinaus aus Figur 2 des Patentdokuments DE 10 2015 114 474 A1 bekannt. Diese Wärmepumpenanlage besteht aus einer Wärmepumpe und einer Wärmesenke, wobei die Wärmesenke als Heizkreismedium führender Heizkreis und als Warmwasserspeicher ausgebildet ist, wobei die Wärmepumpe in einer ersten, als Normalbetrieb bezeichneten Betriebsart zur Zuführung von Umgebungswärme an die Wärmesenke und ein von der Wärmepumpe mit Wärme beladbarer Pufferspeicher in einer zweiten, als Abtaubetrieb bezeichneten Betriebsart zur Zuführung von Wärme an die Wärmepumpe ausgebildet ist. Bei dieser Lösung ist die Wärmepumpe als sogenanntes Split-Gerät mit Außen- und Inneneinheit (also zwei Anlagenteile) und die Wärmesenke als Heizkreis ausgebildet. Bei der nachfolgend beschriebenen erfindungsgemäßen Lösung kann dies auch genau so der Fall sein, ebenso gut möglich ist es dort aber auch, dass einerseits die Wärmepumpe als reine Inneneinheit und andererseits die Wärmesenke wahlweise als Heizkreis und/oder als Warmwasserspeicher ausgebildet ist.

Der Erfindung liegt die Aufgabe zugrunde, eine Wärmepumpenanlage der eingangs genannten Art zu verbessern. Insbesondere soll der Wirkungsgrad einer solchen Wärmepumpenanlage weiter gesteigert werden.

Diese Aufgabe ist mit einer Wärmepumpenanlage der eingangs genannten Art durch die im Kennzeichen des Patentanspruchs 1 aufgeführten Merkmale gelöst.

Nach der Erfindung ist also vorgesehen, dass zur Umschaltung zwischen den Betriebsarten für das Heizkreismedium eine in der Wärmepumpe (1) integrierte Umschalteinrichtung (4) vorgesehen ist, und dass einem ersten Ausgang der Umschalteinrichtung in Strömungsrichtung des Heizkreismediums gesehen ein Ventil zur wahlweisen Zuführung des Heizkreismediums zum Heizkreis und/oder zum Warmwasserspeicher nachgeschaltet ist.

Andere vorteilhafte Weiterbildungen ergeben sich aus den abhängigen Patentansprüchen.

Der Vollständigkeit halber wird noch auf folgenden, weiter abliegenden Dokumente CH 607 719 A5 und AU 2013245437 A1 hingewiesen, bei denen im Vergleich zum Patentanspruch 1 entweder eine Wärmesenke oder ein Pufferspeicher fehlt.

Die erfindungsgemäße Wärmepumpenanlage einschließlich ihrer vorteilhaften Weiterbildungen gemäß der abhängigen Patentansprüche wird nachfolgend anhand der zeichnerischen Darstellung eines bevorzugten Ausführungsbeispiels näher erläutert.

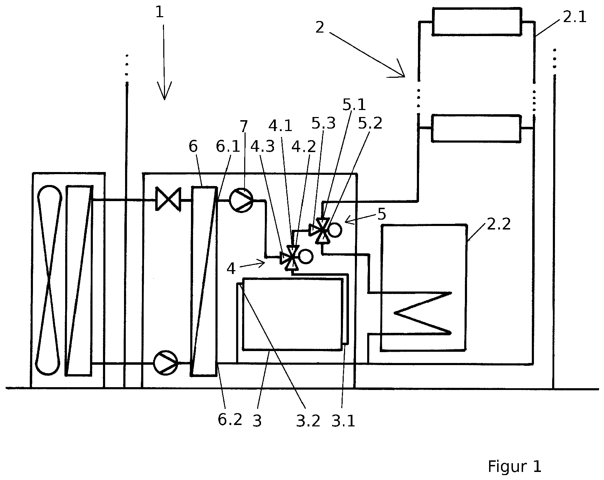

Es zeigt
- Figur 1: schematisch die erfindungsgemäße Wärmepumpenanlage mit Pufferspeicher sowie mit Heizkreis und Warmwasserspeicher.

Die in Figur 1 dargestellte Wärmepumpenanlage besteht in bekannter Weise zunächst aus einer Wärmepumpe 1 und einer Wärmesenke 2. Die Wärmesenke 2 ist dabei als Heizkreis 2.1 und als Warmwasserspeicher 2.2 ausgebildet. Ferner ist die Wärmepumpe 1 in einer ersten, als Normalbetrieb bezeichneten Betriebsart zur Zuführung von Umgebungswärme an die Wärmesenke 2 und ein von der Wärmepumpe 1 mit Wärme beladbarer Pufferspeicher 3 in einer zweiten, als Abtaubetrieb bezeichneten Betriebsart zur Zuführung von Wärme an die Wärmepumpe 1 ausgebildet.

Weiterhin ist vorgesehen, dass der Pufferspeicher 3, der vorzugsweise ein Fassungsvermögen für Heizkreismedium von bis zu 40 Litern aufweist, in der Wärmepumpe 1 integriert ausgebildet ist. Wie aus Figur 1 ersichtlich, ist dabei besonders bevorzugt vorgesehen, dass die Wärmepumpe 1 ein quaderförmiges Gehäuse aufweist und der Pufferspeicher 3 in diesem Gehäuse angeordnet ist.

Weiterhin ist zur Umschaltung zwischen den Betriebsarten für das Heizkreismedium eine in der Wärmepumpe 1 integrierte Umschalteinrichtung 4 vorgesehen. Diese umfasst vorzugsweise ein Ventil, insbesondere, wie dargestellt, ein vorzugsweise elektrisch betätigbares Dreiwegeventil (wahlweise Umschalt- oder auch Mischventil).

Dank der Umschalteinrichtung 4 ist es dabei möglich, den Pufferspeicher 3 unabhängig von der Wärmesenke 2 zu durchströmen. Somit kann der Pufferspeicher 3 mit soviel Energie beladen werden, wie für den Abtauprozess notwendig ist. Das Temperaturniveau im Pufferspeicher 3 ist somit genau auf den Abtauprozess optimiert. Beeinträchtigungen des Temperaturniveaus durch Heizkreise, Rohrleitungen, zwischengeschaltete Warmwasserspeicher oder dergleichen werden umgangen, wodurch die Effizienz der Anlage verbessert wird.

Wesentlich ist nun, wie in Figur 1 dargestellt, dass einem ersten Ausgang 4.1 der Umschalteinrichtung 4 in Strömungsrichtung des Heizkreismediums gesehen ein Eingang 5.1 eines vorzugsweise elektrisch betätigbaren Ventils 5 zur wahlweisen Zuführung des Heizkreismediums zum Heizkreis und/oder zum Warmwasserspeicher nachgeschaltet ist. Das Ventil 5 ist dabei ebenfalls vorzugsweise als Dreiwegeventil (wahlweise Umschaltoder auch Mischventil) ausgebildet. Darüber hinaus kann besonders bevorzugt vorgesehen sein, dass das Ventil 5 und die Umschalteinrichtung 4 baugleich ausgebildet sind, d. h. es wird zweimal das gleiche Bauteil verwendet.

Weiterhin ist zunächst in an sich bekannter Weise vorgesehen, dass die Wärmepumpenanlage einen als Kondensator arbeitenden und von einem Heizkreismedium durchströmten Wärmeübertrager 6 aufweist. Besonders bevorzugt ist in diesem Fall dann nach der Erfindung vorgesehen, dass die Umschalteinrichtung 4 in Strömungsrichtung des Heizkreismediums gesehen mit ihrem Eingang 4.3 einem Ausgang 6.1 des Wärmeübertragers 6 nach und mit einem zweiten Ausgang 4.2 einem Eingang 3.1 des Pufferspeichers 2 vorgeschaltet ausgebildet ist.

Ferner ist besonders bevorzugt vorgesehen, dass ein Ausgang 3.2 des Pufferspeichers 3 in Strömungsrichtung des Heizkreismediums gesehen einem Eingang 6.2 des Wärmeübertragers 6 vorgeschaltet ausgebildet ist.

Darüber hinaus ist besonders bevorzugt vorgesehen, dass der Heizkreis 2.1 einerseits mit einem ersten Ausgang 5.1 des Ventils 5 und andererseits mit einem Eingang 6.2 des Wärmeübertragers 6 hydraulisch verbunden ausgebildet ist. Ferner ist bevorzugt vorgesehen, dass der Warmwasserspeicher 2.2 einerseits mit einem zweiten Ausgang 5.2 des Ventils 5 und andererseits mit einem Eingang 6.2 des Wärmeübertragers 6 hydraulisch verbunden ausgebildet ist.

Sollte die Wärmepumenanlage, wie in Figur 1 dargestellt, aus zwei miteinander verbundenen Anlagenteilen bestehen, von denen einer in einem Gebäude und einer außerhalb des Gebäudes angeordnet ist, dann ist weiterhin, wie dargestellt, besonders bevorzugt vorgesehen, dass der Pufferspeicher 3 in dem im Gebäude angeordneten Anlagenteil angeordnet ist.

Schließlich ist besonders bevorzugt vorgesehen, dass zwischen dem Ausgang 6.1 des Wärmeübertragers 6 und der Umschalteinrichtung 4 eine Heizkreispumpe 7 zur Umwälzung des Heizkreismediums angeordnet ist.

Die erfindungsgemäße Wärmepumpenanlage funktioniert wie folgt:
Im Normalbetrieb nimmt ein Kältemittel der Wärmepumpe 1 über die Außeneinheit (in Figur 1 ist schematisch der Verdampfer mit Ventilator dargestellt) Umgebungswärme auf vergleichsweise niedrigem Temperaturniveau auf. Das Kältemittel wird dann mit der in Figur 1 erkennbaren Kreislaufpumpe zum als Kondensator arbeitenden Wärmeübertrager 6 transportiert, um dort die Wärme, die sich dann Dank der Kompression auf einem höheren Temperaturniveau befindet, an das Heizkreismedium abzugeben. Das Kältemittel wird dann noch in bekannter Weise über die in Figur 1 dargestellte Drossel entspannt, bevor es zum Verdampfer zurück gelangt.

Das Heizkreismedium wird mit Hilfe der Pumpe 7 gefördert. Vom Wärmeübertrager 6 gelangt es dabei zunächst zur Umschalteinrichtung 4, die das Heizkreismedium im Normalbetrieb direkt zum Ventil 5 weiter leitet. Je nach Bedarf wird dann das Heizkreismedium über die Ausgänge 5.1 und 5.2 zum Heizkreis 2.1 und/oder zum Warmwasserspeicher 2.2 geleitet. Von dort gelangt das abgekühlte Heizkreismedium dann über den Eingang 6.2 in den Wärmeübertrager 6 zurück, so dass der Kreis letztlich geschlossen ist.

Da die Außeneinheit solcher Wärmepumpenanlage bei entsprechenden Witterungsbedingungen zur Vereisung neigt, ist es erforderlich, dieses hin und wieder abzutauen. Dies geschieht in bekannter Weise zunächst einmal durch Umkehr des Wärmepumpenkreislaufs, d. h. der Verdampfer wird nun als Kondensator und der Wärmeübertrager 6 als Verdampfer eingesetzt.

Wesentlich für die erfindungsgemäße Wärmepumpenanlage ist nun, dass die Wärme für den Abtauprozess nicht der Wärmesenke 2, also insbesondere dem Heizkreis 2.1 und/oder dem Warmwasserspeicher 2.2, entzogen wird, sondern dem extra dafür vorgesehenen, im Gehäuse der Wärmepumpe 1 integrierten Pufferspeicher 3, dem bereits während des Normalbetriebs, vorzugsweise am Ende des Normalbetriebs warmes Heizkreismedium zugeführt wurde, d. h. es wird bereits während des Normalbetriebs ein Reservoir an warmem Heizkreismedium geschaffen, das dann im Abtaubetrieb als Wärmequelle zum Abtauen des dann als Kondensator arbeitenden Verdampfers zur Verfügung steht.

### Bezugszeichenliste

- 1: Wärmepumpe
- 2: Wärmesenke
- 2.1: Heizkreis
- 2.2: Warmwasserspeicher
- 3: Pufferspeicher
- 3.1: Eingang
- 3.2: Ausgang
- 4: Umschalteinrichtung
- 4.1: erster Ausgang
- 4.2: zweiter Ausgang
- 4.3: Eingang
- 5: Ventil
- 5.1: erster Ausgang
- 5.2: zweiter Ausgang
- 5.3: Eingang
- 6: Wärmeübertrager
- 6.1: Ausgang
- 6.2: Eingang
- 7: Heizkreispumpe

### Bezugszeichenliste

- 1: Wärmepumpe
- 2: Wärmesenke
- 2.1: Heizkreis
- 2.2: Warmwasserspeicher
- 3: Pufferspeicher
- 3.1: Eingang
- 3.2: Ausgang
- 4: Umschalteinrichtung
- 4.1: erster Ausgang
- 4.2: zweiter Ausgang
- 4.3: Eingang
- 5: Ventil
- 5.1: erster Ausgang
- 5.2: zweiter Ausgang
- 5.3: Eingang
- 6: Wärmeübertrager
- 6.1: Ausgang
- 6.2: Eingang
- 7: Heizkreispumpe

## Patentansprüche

1. Wärmepumpenanlage, umfassend eine Wärmepumpe (1) und eine Wärmesenke (2), wobei die Wärmesenke (2) als Heizkreismedium führender Heizkreis (2.1) und als Warmwasserspeicher (2.2) ausgebildet ist, wobei die Wärmepumpe (1) in einer ersten, als Normalbetrieb bezeichneten Betriebsart zur Zuführung von Umgebungswärme an die Wärmesenke (2) und ein von der Wärmepumpe (1) mit Wärme beladbarer Pufferspeicher (3) in einer zweiten, als Abtaubetrieb bezeichneten Betriebsart zur Zuführung von Wärme an die Wärmepumpe (1) ausgebildet ist, wobei der Pufferspeicher (3) in einem Gehäuse der Wärmepumpe (1) integriert ausgebildet ist,
**dadurch gekennzeichnet,**
**dass** zur Umschaltung zwischen den Betriebsarten für das Heizkreismedium eine in der Wärmepumpe (1) integrierte Umschalteinrichtung (4) vorgesehen ist, und
**dass** einem ersten Ausgang (4.1) der Umschalteinrichtung (4) in Strömungsrichtung des Heizkreismediums gesehen ein Ventil (5) zur wahlweisen Zuführung des Heizkreismediums zum Heizkreis (2.1) und/oder zum Warmwasserspeicher (2.2) nachgeschaltet ist.

2. Wärmepumpenanlage nach Anspruch 1, wobei diese einen als Kondensator arbeitenden und von einem Heizkreismedium durchströmten Wärmeübertrager (6) aufweist,
**dadurch gekennzeichnet,**
**dass** die Umschalteinrichtung (4) in Strömungsrichtung des Heizkreismediums gesehen einem Ausgang (6.1) des Wärmeübertragers (6) nach und mit einem zweiten Ausgang (4.2) einem Eingang (3.1) des Pufferspeichers (2) vorgeschaltet ausgebildet ist.

3. Wärmepumpenanlage nach Anspruch 2,
**dadurch gekennzeichnet,**
**dass** ein Ausgang (3.2) des Pufferspeichers (3) in Strömungsrichtung des Heizkreismediums gesehen einem Eingang (6.2) des Wärmeübertragers (6) vorgeschaltet ausgebildet ist.

4. Wärmepumpenanlage nach Anspruch 1 und 2,
**dadurch gekennzeichnet,**
**dass** der Heizkreis (2.1) einerseits mit einem ersten Ausgang (5.1) des Ventils (5) und andererseits mit einem Eingang (6.2) des Wärmeübertragers (6) hydraulisch verbunden ausgebildet ist.

5. Wärmepumpenanlage nach Anspruch 1 und 2,
**dadurch gekennzeichnet,**
**dass** der Warmwasserspeicher (2.2) einerseits mit einem zweiten Ausgang (5.2) des Ventils (5) und andererseits mit einem Eingang (6.2) des Wärmeübertragers (6) hydraulisch verbunden ausgebildet ist.

6. Wärmepumpenanlage nach einem der Ansprüche 1 bis 5, wobei diese aus zwei miteinander verbundenen Anlagenteilen besteht, von denen einer in einem Gebäude und einer außerhalb des Gebäudes angeordnet ist,
**dadurch gekennzeichnet,**
**dass** der Pufferspeicher (3) in dem im Gebäude angeordneten Anlagenteil angeordnet ist.

7. Wärmepumpenanlage nach einem der Ansprüche 1 bis 6,
**dadurch gekennzeichnet,**
**dass** der Pufferspeicher (3) ein Fassungsvermögen von maximal 40 Litern aufweist.

8. Wärmepumpenanlage nach einem der Ansprüche 1 bis 7,
**dadurch gekennzeichnet,**
**dass** die Wärmepumpe (1) ein quaderförmiges Gehäuse aufweist und der Pufferspeicher (3) in diesem Gehäuse angeordnet ist.

## Claims

1. Heat pump system, comprising a heat pump (1) and a heat sink (2), wherein the heat sink (2) is designed as a heating circuit (2.1) carrying the heating circuit medium and as a hot water tank (2.2), wherein the heat pump (1) is designed in a first operating mode referred to as normal operation for supplying ambient heat to the heat sink (2), and a buffer storage tank (3) that can be loaded with heat by the heat pump (1) is designed in a second operating mode referred to as defrosting mode for supplying heat to the heat pump (1), wherein the buffer storage tank (3) is designed to be integrated in a housing of the heat pump (1),
**characterized in that**
a switching device (4) integrated in the heat pump (1) is provided for switching between the operating modes for the heating circuit medium, and
**in that** a valve (5) for selectively supplying the heating circuit medium to the heating circuit (2.1) and/or to the hot water tank (2.2) is connected downstream of a first outlet (4.1) of the switching device (4) as seen in the direction of flow of the heating circuit medium.

2. Heat pump system according to claim 1,
wherein it has a heat exchanger (6) operating as a condenser and through which a heating circuit medium flows,
**characterized in that**
the switching device (4), as seen in the direction of flow of the heating circuit medium, is designed downstream of an outlet (6.1) of the heat exchanger (6) and, by means of a second outlet (4.2), upstream of an inlet (3.1) of the buffer storage tank (2).

3. Heat pump system according to claim 2,
**characterized in that**
an outlet (3.2) of the buffer storage tank (3), as seen in the direction of flow of the heating circuit medium, is designed upstream of an inlet (6.2) of the heat exchanger (6).

4. Heat pump system according to claim 1 and 2, **characterized in that**
the heating circuit (2.1) is designed to be hydraulically connected, on the one hand, to a first outlet (5.1) of the valve (5) and, on the other hand, to an inlet (6.2) of the heat exchanger (6).

5. Heat pump system according to claim 1 and 2,
**characterized in that**
the hot water tank (2.2) is designed to be hydraulically connected, on the one hand, to a second outlet (5.2) of the valve (5) and, on the other hand, to an inlet (6.2) of the heat exchanger (6).

6. Heat pump system according to one of claims 1 to 5, wherein it consists of two system parts connected to one another, one of which is arranged in a building and the other outside the building,
**characterized in that**
the buffer storage tank (3) is arranged in the system part arranged in the building.

7. Heat pump system according to one of claims 1 to 6,
**characterized in that**
the buffer storage tank (3) has a capacity of no more than 40 litres.

8. Heat pump system according to one of claims 1 to 7,
**characterized in that**
the heat pump (1) has a cuboid housing and the buffer storage tank (3) is arranged in this housing.

## Revendications

1. Installation de pompe à chaleur comprenant une pompe à chaleur (1) et un puits thermique (2), sachant que le puits thermique (2) est constitué sous la forme d'un circuit de chauffage (2.1) véhiculant un milieu de circuit de chauffage et sous la forme d'un accumulateur d'eau chaude (2.2), sachant que la pompe à chaleur (1) est constituée dans un premier mode de fonctionnement désigné comme fonctionnement normal pour amener de la chaleur ambiante au puits thermique (2) et un réservoir tampon (3) pouvant être chargé en chaleur par la pompe à chaleur (1) est constitué dans un deuxième mode de fonctionnement désigné comme fonctionnement de dégivrage pour amener de la chaleur à la pompe à chaleur (1), sachant que le réservoir tampon (3) est constitué intégré dans une enceinte de la pompe à chaleur (1),
**caractérisée en ce qu'**
un système de basculement (4) intégré dans la pompe à chaleur (1) est prévu pour le basculement entre les modes de fonctionnement pour le milieu de circuit de chauffage et
**en ce qu'**une soupape (5) est montée en aval d'une première sortie (4.1) du système de basculement (4) vue en direction d'écoulement du milieu de circuit de chauffage pour l'alimentation sélective de milieu de circuit de chauffage au circuit de chauffage (2.1) et/ou à l'accumulateur d'eau chaude (2.2).

2. Installation de pompe à chaleur selon la revendication 1, sachant que celle-ci comporte un échangeur de chaleur (6) fonctionnant comme un condensateur et traversé par un milieu de circuit de chauffage,
**caractérisée en ce que**
le système de basculement (4) vu dans la direction d'écoulement du milieu de circuit de chauffage est constitué monté en aval d'une sortie (6.1) de l'échangeur de chaleur (6) et avec une deuxième sortie (4.2), est constitué monté en amont d'une entrée (3.1) du réservoir tampon (2).

3. Installation de pompe à chaleur selon la revendication 2,
**caractérisée en ce qu'**
une sortie (3.2) du réservoir tampon (3) vu dans la direction d'écoulement du milieu de circuit de chauffage est constituée montée en amont d'une entrée (6.2) de l'échangeur de chaleur (6).

4. Installation de pompe à chaleur selon les revendications 1 et 2,
**caractérisée en ce que**
le circuit de chauffage (2.1) est constitué relié hydrauliquement d'une part à une première sortie (5.1) de la soupape (5) et d'autre part à une entrée (6.2) de l'échangeur de chaleur (6).

5. Installation de pompe à chaleur selon les revendications 1 et 2,
**caractérisée en ce que**
l'accumulateur d'eau chaude (2.2) est constitué relié hydrauliquement d'une part à une deuxième sortie (5.2) de la soupape (5) et d'autre part à une entrée (6.2) de l'échangeur de chaleur (6).

6. Installation de pompe à chaleur selon l'une quelconque des revendications 1 à 5, sachant que celle-ci est composée de deux parties d'installation reliées entre elles dont une est disposée dans un bâtiment et une en dehors du bâtiment,
**caractérisée en ce que**
le réservoir tampon (3) est disposé dans la partie d'installation disposée dans le bâtiment.

7. Installation de pompe à chaleur selon l'une quelconque des revendications 1 à 6,
**caractérisée en ce que**
le réservoir tampon (3) comporte une capacité maximale de 40 litres.

8. Installation de pompe à chaleur selon l'une quelconque des revendications 1 à 7,
**caractérisée en ce que**
la pompe à chaleur (1) comporte une enceinte rectangulaire et le réservoir tampon (3) est disposé dans celle-ci.
